# EUROPEAN PATENT SPECIFICATION

(11) **EP 2 084 970 B1**
(45) Date of publication and mention of the grant of the patent: **07.08.2013**
(21) Application number: 08425823.5
(22) Date of filing: 30.12.2008
(51) Int. Cl.: A23G 3/20, A23G 3/28

(54) **Equipment for the realization of decorations on food**
Ausrüstung zur Realisierung von Dekorationen auf Lebensmitteln
Équipement pour la réalisation des décorations sur les aliments

(30) Priority: 23.01.2008 IT VI20080010
(43) Date of publication of application: 05.08.2009
(73) Proprietor: Decosil S.r.l., 35010 Limena (PD) (IT)
(72) Inventor: Laghi, Stefano, 48018 Faenza (RA) (IT); Milan, Gianluca, 35010 Villafranca (PD) (IT); Milan, Michela, 35030 Rubano (PD) (IT); Milan, Rafaella, 35142 Padova (IT)
(74) Representative: Iannone, Carlo Luigi

(56) References cited:
- EP-A- 0 048 184
- EP-A- 0 273 609
- EP-A- 0 630 574
- EP-A- 1 604 573
- EP-A- 1 842 432
- GB-A- 801 197
- GB-A- 2 257 946
- US-A1- 2003 075 830

## Description

The present invention refers, in general, to an equipment for making decorations on foodstuffs such as cakes and pastry-making confectionery products in general, and any foodstuff not cooked in oven.

More in particular, the invention concerns an equipment for making all-turned artistic or decorative objects, such as, specifically, Easter eggs.

Food-grade moulds, usable, in particular, in pastry-making confectionery, for manufacturing by casting chocolates, sweets, pastries, cookies and comfits, and for making objects by sugar, almond-paste, cakes and/or ice-creams dough pressing, are still known.

In the specific case of Easter eggs, the same are made starting from a polycarbonate mould having the shape of half an egg, within which the chocolate is cast till to get a jacket of the desired thickness; repeating such a process using an additional mould, the two halves of the egg are obtained, which are then welded together by the overheating of the edges on a heated plate and the subsequent union of the two parties.

In case it is desired to make special decorations on the egg, such decorations are usually obtained by sugar and/or almond-paste and/or cakes dough pressing.

Alternatively, in order to include the decorations into the chocolate of the egg, it is possible to position one or more moulds, made without edge, of the desired decorations inside the polycarbonate mould, then blocking with some tempered chocolate the edges of the moulds the of the various subjects; later, after the chocolate is hardened, so as to block the moulds in position, the egg is made by providing the casting of the chocolate into the polycarbonate mould till to get a jacket of a desired thickness, emptying the mould, then leaving it to dry as usual and finally removing the egg from the mould when the chocolate is fully crystallized.

Chocolate decorations can be also made on the egg, filling with tempered chocolate one or more moulds, provided with edge, of the desired decorations and applying at pleasure on the egg the subjects obtained from the moulds.

For example, US 2003/075830 A1 and EP-A-1604573 disclose a method and an apparatus for producing a form body of a cooked sugar mass (such as a chocolate egg) in a mould which allow to apply decorations by pressure and/or by incorporating them into the sugar mass only on one half of the egg or on each of the halves of the egg made from the related rigid plastic moulds; however, according to said documents, it is not possible to obtain a decorative subject made by continuous parts provided either in one half and in the other half of the egg.

On the other hand, EP 630574 discloses a method for producing a moulded chocolate product having a complicated concaved and convexed decorative pattern thereon and with a solid form, such as a cylinder or a cube; moreover, the mould of EP 630574 does not comprise a rigid shell to coupled to.

In any case, the traditional methods don't allow to obtain artistic and/or decorative objects, such as the aforesaid Easter eggs, with deep and/or high or low relief decorations.

In the specific case of Easter eggs, in addition, the decoration techniques of the known type so far described don't allow to provide an all-turned continuous decoration on the entire surface of the egg, since each complete decorative subject may be applied by pressure and/or incorporated into the egg chocolate, in its entirety, only on each of the halves of the egg made from the related polycarbonate moulds and they cannot be made parts of a decorative subject in one half of the egg and other parts of the decorative subject itself in the other half.

As part of the requirements listed above, therefore, the aim of the present invention is to provide an equipment for making decorations on foodstuffs, which allows to obtain deep decorations, in high and/or low relief and even in undercut, which cannot be obtained with equipments and processes of traditional type.

Another aim of the present invention is to provide an equipment for making decorations on foodstuffs, such as cakes and pastry-making confectionery products, and, in particular, on Easter eggs, which allows to obtain all-turned continuous decorations, on the entire chocolate surface of the Easter egg.

Further aim of the present invention is to indicate an equipment for making decorations on foodstuffs, which is extremely simple to produce and use and which allows to limit the cost of the final product and the working times (in particular, the times of chocolate crystallisation), compared to the known techniques.

These and other aims are achieved by an equipment for making decorations on foodstuffs, as described, in its generic and preferred embodiment, according to the attached claim 1.

The dependent claims contain other characteristics of detail of the invention.

In an advantageous way, according to the invention, for manufacturing subjects and making artistic and/or decorative objects, food silicone moulds are used, fit for the contact with aqueous foods, fats, oily and acid products, in compliance with the regulations currently in force.

Such moulds can be made, in particular, of silicone elastomers which are polymerized with polyaddition reaction.

The food silicone moulds are used since durable, flexible, non-deformable, washable, antisticking, absolutely non-toxic, odourless and suitable to not alter in any manner the organoleptic qualities of the foods in an thermal arc compatible with the thermal stability of the silicone (maximum temperature: 150°C).

In particular, according to the present invention, moulds made of translucent silicone are preferably used, which look like a soft elastomer, and ready for use, after a preliminary water and soap or dishwasher wash in order to remove the protective talc layer present in silicone moulds never used.

Further aims and advantages of the present invention will be clear from the description that follows, related to an illustrative and preferred, but not limited to, embodiment of the equipment for making decorations on foodstuffs, according to the invention, and from the attached drawings, where:

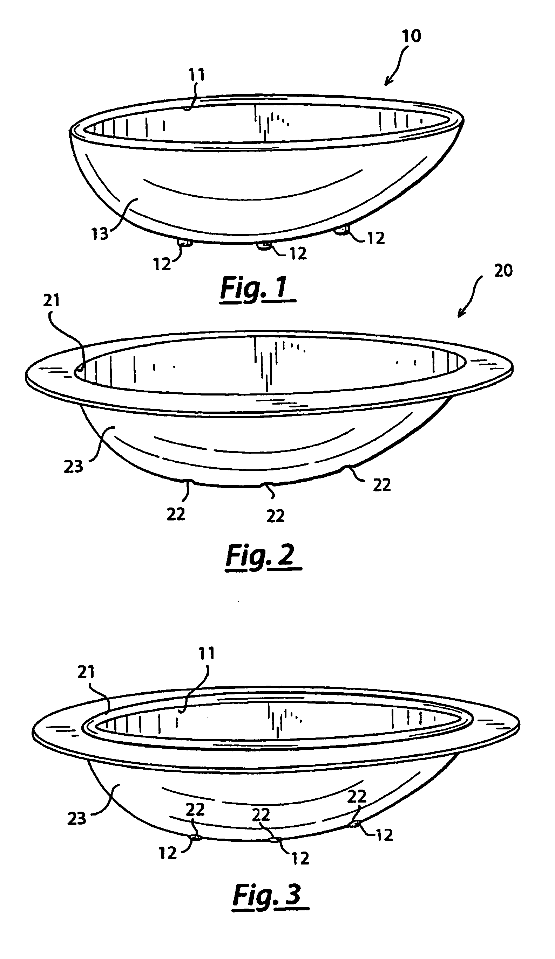

- figure 1 is a perspective view of a food silicone mould used in the equipment for making decorations on foodstuffs, such as cakes and pastry-making confectionery products and, in particular, Easter eggs, according to the present invention;
- figure 2 is a perspective view of a thermoformed or polycarbonate mould used in the equipment for making decorations on foodstuffs, such as cakes and pastry-making confectionery products, and, in particular, Easter eggs, according to the present invention;
- figure 3 is a perspective view of the assembled entire equipment, according to the invention.

First of all, it is paid attention that, although the following description and the attached figures refer to a particular method for making decorations on Easter eggs, for which the invention offers more advantages, the present invention can be similarly extended to other types of decorations (which can be made with cast sugar, chocolate of various kind, isomalt, tablet pressing or almond-paste, cakes dough, ice-cream, liquorice, powdered grain, etc.) and other types of cakes or generic products for pastry-making confectionery and/or foods industry in general (catering, etc.).

Referring to the figures mentioned, a food-grade silicone shaped case is indicated with 10, while a shaped shell, made of rigid plastic (of thermoformed or polycarbonate type) is indicated with 20.

The case 10 made of food-grade silicone has the desired decorations on the concave surface 11 and can be housed within the cavity 21 provided centrally in the shell 20.

In particular, high and low relief and even undercut deep decorations, which cannot be obtained using a rigid mould, may be made on the concave surface 11.

In this way, after having positioned the case 10 inside the cavity 21 of the shell 20, it is possible to cast into the case 10 isomalt, liquid sugar, tempered chocolate of any colour and percentage of cocoa and soft mixtures in general, such as tablet pressing or almond-paste, liquorice, powdered grain, etc. in order to obtain the product with the desired decorations, already previously made directly in the silicon case 10.

In particular, in case decorative objects such as Easter eggs are made, the silicone case 10 and the shell 20 are obviously cap-shaped (with a half egg shape) and chocolate molten at a temperature of about 28-31°C is cast inside the silicone case 10 (the temperature depends on the type of chocolate used, such as milk, dark, white and/or coloured one), until a jacket of the desired thickness is obtained.

In case of use of tempered chocolate, once casting is carried out, it is advisable to put the whole (case 10 + cast chocolate) in a refrigerator at a temperature of about 4°C until the complete solidification; then, in case of continuous production with the same silicone case or mould 10, it is advisable to refrigerate in freezer, in order to avoid that the overheating of the mould melts the chocolate, causing defects in the produced subjects.

Alternatively, in case of use of pre-crystallized chocolate, the use of the destroyer (fridge or freezer) is not necessary.

In this way, making two cases 10 with the desired decorations made directly on the inner surface 11 and putting them into the shell 20 for the operations of casting of the chocolate it is possible to get Easter eggs with deep decorations, even in undercut, which cannot be certainly achieved by the use of a rigid mould; in particular, all-turned effects are obtained by making two cases 10 reciprocally complementary and combined.

Furthermore, it is possible to create an all-turned continuous decoration on the whole egg, providing to carry out the necessary decorations on both cases 10 and, in particular, at the perimetrical outline of the cases 10, in order to obtain the suggestive aesthetical effect of a hand carved object.

Moreover, the case 10 is removably anchored to the bottom of the rigid shell 20 providing to make one or more silicone protuberances or buttons 12, placed on the bottom of the outer surface 13 of the case 10 and belonging to the case 10 itself, which may be inserted into respective through openings or holes 22 made in the outer surface or cap 23, in correspondence of the bottom of the shell 20.

Alternatively, the removable anchoring of the silicone case 10 to the rigid shell 20 may be obtained using a rigid plate drilled at the opening of the cavity 21 (in order to allow the outflow of the excess cast chocolate) and fixed to the rigid shell 20 through generic fastening systems, such as laces, small bands, elastic bands, pliers, etc.

According to the invention, therefore, it is possible to use a single rigid shell 20 for the operations of casting of the chocolate, inserting into it various silicone cases 10, different depending on the decorations desired on the product; in addition, making the decoration directly onto the silicone case 10, it is possible to obtain considerable aesthetic effects on the entire side surface of the artistic or decorative object (in the case described, an Easter egg).

From the description made the characteristics of equipment for making decorations on foodstuffs, which is the object of this invention, as well as the resulting benefits are clear.

It is, finally, clear that many other variations can be made to the equipment in question, without for this reason going out of the novelty principles inherent of the inventive idea, as it is clear that, in the practical implementation of the invention, materials, shapes and sizes of the illustrated details could be any, depending on the needs, and could be replaced with others technically equivalent.

## Claims

1. Equipment for making decorations on pastry-making confectionery products and in particular on Easter eggs, comprising at least one cap-shaped case (10), made of food-grade silicone, and a cap-shaped shell (20), made of rigid plastic material, of the thermoformed or polycarbonate type which has at least one cavity (21) into which said case (10) is housed, wherein said case (10) has a concave inner surface (11) within which foodstuffs and soft mixtures can be leached, **characterised in that** said concave inner surface (11) is directly provided with relief and undercut deep decorations, and **in that** said case (10) is removably anchored to said shell (20) by means of at least one silicone protuberance (12) of said case (10), which is inserted in respective through openings or holes (22) made on an outer surface (23) of said shell (20), or, alternately, said case (10) is removably anchored to said shell (20) by means of fastening systems, such as laces, small bands, elastic bands, pliers, which fix said shell (20) to at least one rigid element drilled at the opening of said cavity (21) of the shell (20).

2. Equipment as claimed in claim 1, **characterised in that** said case (10) is made of silicone elastomer.

3. Equipment as claimed in claim 1, **characterised in that** said case (10) is made of translucent silicone which looks like a soft elastomer.

## Patentansprüche

1. Ausrüstung zur Herstellung von Dekorationen auf Konditoreiwaren und insbesondere auf Ostereiern, umfassend mindestens einen kappenförmigen Mantel (10), hergestellt aus lebensmittelverträglichem Silicon, und eine kappenförmige Hülle (20), hergestellt aus steifem Kunststoffmaterial vom Polycarbonattyp oder warmgeformten Typ, welche mindestens einen Hohlraum (21) aufweist, in dem der Mantel (10) untergebracht ist, wobei der Mantel (10) eine konkave innere Oberfläche (11) aufweist, worin Lebensmittel und weiche Mischungen eingebracht werden können,
**dadurch gekennzeichnet, dass** die konkave innere Oberfläche (11) direkt mit reliefartigen und eingeschnittenen tiefen Dekorationen versehen ist, und dadurch, dass der Mantel (10) mittels mindestens eines Siliconvorsprungs (12) des Mantels (10), welcher in bzw. durch Öffnungen oder Löcher (22), die auf einer äußeren Oberfläche (23) der Hülle (20) gebildet wurden, (ein)geführt ist, entfernbar an der Hülle (20) verankert ist oder, alternativ, der Mantel (10) mittels Befestigungssystemen, wie z.B. Riemen, schmalen Bändern, elastischen Bändern, Heftklammern, welche die Hülle (20) an mindestens ein steifes Element, das an der Öffnung des Hohlraums (21) der Hülle (20) gebohrt ist, fixieren, entfernbar an der Hülle (20) verankert ist.

2. Ausrüstung nach Anspruch 1, **dadurch gekennzeichnet, dass** der Mantel (10) aus Silicon-Elastomer hergestellt ist.

3. Ausrüstung nach Anspruch 1, **dadurch gekennzeichnet, dass** der Mantel (10) aus transluzentem Silicon, das wie ein Weichelastomer aussieht, hergestellt ist.

## Revendications

1. Equipement pour la réalisation de décorations sur des produits de confiserie et de pâtisserie et en particulier sur des oeufs de Pâques, comprenant au moins un récipient en forme de calotte (10), fabriqué en silicone de qualité alimentaire, et une coque en forme de calotte (20), fabriquée en matériau plastique rigide, du type thermoformé ou polycarbonate qui a au moins une cavité (21) dans laquelle ledit récipient (10) est logé, dans lequel ledit récipient (10) a une surface intérieure concave (11) à l'intérieur de laquelle des aliments et des mélanges mous peuvent être transférés, **caractérisé en ce que** ladite surface intérieure concave (11) est directement pourvue de décorations profondes en relief et évidées, et **en ce que** ledit récipient (10) est fixé de manière amovible à ladite coque (20) au moyen d'au moins une protubérance en silicone (12) dudit récipient (10), qui est insérée dans des ouvertures traversantes respectives ou trous (22) pratiqués sur une surface extérieure (23) de ladite coque (20), ou, en variante, **en ce que** ledit récipient (10) est fixé de manière amovible à ladite coque (20) au moyen de systèmes de fixation, tels que des lacets, des petits rubans, des rubans élastiques, des pinces, qui fixent ladite coque (20) à au moins un élément rigide percé au niveau de l'ouverture de ladite cavité (21) de la coque (20).

2. Equipement selon la revendication 1, **caractérisé en ce que** ledit récipient (10) est en élastomère de silicone.

3. Equipement tel que revendiqué dans la revendication 1, **caractérisé en ce que** ledit récipient (10) est en silicone transparent qui ressemble à un élastomère souple.
